# NEUE EUROPÄISCHE PATENTSCHRIFT

(11) **EP 0 358 979 B2**
(45) Veröffentlichungstag und Bekanntmachung des Hinweises auf die Entscheidung über den Einspruch: **08.11.2000**
(45) Hinweis auf die Patenterteilung: 17.06.1992
(21) Anmeldenummer: 89115363.7
(22) Anmeldetag: 19.08.1989
(51) Int. Cl.: C08G 18/62, C08G 18/72, C09D 175/04

(54) **Beschichtungsmittel, ein Verfahren zu ihrer Herstellung und die Verwendung von ausgewählten Zweikomponenten- Polyurethansystemen als Bindemittel für derartige Beschichtungsmittel**
Coating masses, process for their preparation and the use of selected two-component polyurethane systems as binding agents in this kind of coating masses
Masses de revêtement, leur procédé de préparation et utilisation de systèmes sélectionnés de polyuréthane à deux composants comme liant pour de telles masses de revêtement

(30) Priorität: 01.09.1988 DE 3829587
(43) Veröffentlichungstag der Anmeldung: 21.03.1990
(73) Patentinhaber: BAYER AG, 51368 Leverkusen (DE)
(72) Erfinder: Kubitza, Werner, D-5090 Leverkusen 3 (DE); Gruber, Hermann, Dr., D-5090 Leverkusen 1 (DE); Probst, Joachim, Dr., D-5090 Leverkusen 1 (DE)

(56) Entgegenhaltungen:
- EP-A- 0 215 267
- EP-A- 0 218 906
- DE-A- 2 014 385
- DE-A- 2 507 842
- DE-A- 2 643 642
- DE-C- 2 708 442
- FR-A- 2 301 575
- FR-A- 2 301 578
- GB-A- 1 162 409
- JP-A- 59 191 770
- Progress in Organic Coatings, 3 (1975), S.73
- Progress in Organic Chemistry, 17 (1989), S. 27-39

## Beschreibung

Die Erfindung betrifft einen wäßrigen Zweikomponenten-Polyurethanlack, ein Verfahren zu seiner Herstellung und die Verwendung von musgewählten Zweikomponenten-Polyurethan-Systemen als Bindemittel für solche Lacke.

In der Oberflächen-Technologie spielen ökologische Fragen eine bedeutende Rolle. Ein besonders vordringliches Problem ist die Reduzierung der für Lacke und Beschichtungsstoffe verwendeten Mengen organischer Lösemittel.

Bei chemisch vernetzenden Polyurethanlacken, die aufgrund ihrer hervorragenden Eigenschaften auf dem Beschichtungssektor eine große Bedeutung haben, konnte bisher auf organische Lösemittel nicht verzichtet werden. Die Verwendung von Wasser anstelle von organischen Lösungsmitteln in Zweikomponenten-Polyurethanlacken auf Basis von Polyisocyanaten mit freien Isocyanatgruppen schien bislang nicht möglich, da bekannt ist, daß Isocyanatgruppen nicht nur mit alkoholischen Hydroxylgruppen sondern auch mit Wasser reagieren. Außerdem ist natürlich die Konzentration an, vom Wasser herrührenden, aktiven Wasserstoffatomen in derartigen Systemen weit höher als die Konzentration an Hydroxylgruppen der organischen, NCO-reaktiven Komponente, so daß davon ausgegangen werden mußte, daß in dem ternären System/Polyisocyanat/organische Polyhydroxylverbindung/Wasser vor allem eine Isocyanat-Wasser-Reaktion unter Harnstoff- und Kohlendioxidbildung abläuft, die einerseits nicht zur Vernetzung der organischen Polyhydroxylverbindungen und andererseits zur Schäumung des Lackansatzes aufgrund der Kohlendioxidbildund führt.

Es ist zwar aus der DE-OS 2 708 442 bzw. der DE-OS 3 529 249 bereits bekannt, wäßrigen Kunststoffdispersionen organische Polyisocyanate zwecks Verbesserung des Eigenschaftsbilds zuzusetzen, jedoch handelt es sich bei diesen Kunststoffen einerseits nicht um organische Polyhydroxylverbindungen der üblicherweise in der Polyurethanchemie als Reaktionspartner für Polyisocyanate eingesetzten Art, und andererseits ist der in diesen Vorveröffentlichungen beschriebene Effekt der Polyisocyanatzugabe zu wäßrigen Kunststoffdispersionen vermutlich auf eine Umhüllung des dispergierten Kunststoffs mit dem aus Polyisocyanat und Wasser gebildeten Harnstoff zurückzuführen.

Die FR-A-2 301 578 bzw. FR-A-2 301 575 befaßt sich mit wäßrigen Beschichtung mitteln, in denen die Polyisocyanatkomponente ausschließlich blockierte Isocyanatgruppen aufweist.

Wie jetzt überraschend gefunden wurde, ist es möglich, bei Verwendung von ausgewählten organischen Polyhydroxylverbindungen, d.h. von Polyhydroxypolyacrylaten der nachstehend näher beschriebenen Art als Reaktionspartner für organische Polyisocyanate mit freien Isocyanatgruppen wäßrige Zweikomponenten-Polyurethanlacke dadurch herzustellen, daß man die Polyisocyanate mit freien Isocyanatgruppen in der wäßrigen Polymerisatlösung bzw. -dispersion emulgiert. Die nachstehend näher beschriebenen erfindungsgemäßen Lacke weisen eine Topfzeit von mehreren Stunden auf und härten zu hochwertigen, vernetzten Filmen aus, die bezüglich ihres Eigenschaftsniveaus den bislang aus lösungsmittelhaltigen Zweikomponenten-Polyurethanlacken erhaltenen Lackfilmen vergleichbar sind. Dies ist aus den obengenannten Gründen in höchstem Maße überraschend, da man hätte erwarten müssen, daß eine derartige selektive Reaktion zwischen dem Polyisocyanat und dein in Wasser gelösten bzw. dispergierten, Hydroxylgruppen aufweisenden Polymerisat nicht stattfindet.

Gegenstand der Erfindung ist daher ein Zweikomponenten-Polyurethanlack, welcher als Bindemittelkomponenten
a) eine Polyolkomponente, bestehend aus mindestens einem Hydroxylgruppen aufweisenden Polymerisat von olefinisch ungesättigten Verbindungen und
b) eine Polyisocyanatkomponente einer Viskositat bei 23° C von 50 bis 10 000 mPa.s, bestehend aus mindestens einem organischen Polyisocyanat mit freien Isocyanatgruppen in einem NCO/OH-Äquivalentverhältnis von 0,5:1 bis 5:1 entsprechenden Mengen, sowie gegebenenfalls die üblichen Hilfs- und Zusatzstoffe enthält, wobei die Komponente a) eine wäßrige Lösung und/oder Dispersion eines Hydroxylgruppen, sowie Sulfonat- und/oder Carboxylatgruppen und gegebenenfalls Sulfonsäure- und/oder Carboxylgruppen aufweisenden Polymerisats mit einem Molekulargewicht Mn (Zahlenmittel) von 500 bis 50 000, einer Hydroxylzahl von 16,5 bis 264 mg KOH/g Festharz, einer Säurezahl von 0 bis 150 mg KOH/g Festharz und einem Gehalt an chemisch gebundenen Carboxylat- und/oder Sulfonatgruppen von insgesamt 5 bis 417 Milliäquivalenten pro 100 g Feststoff darstellt, in der die Polyisocyanatkomponente b) emulgiert vorliegt.

Es ist bevorzugt, daß die Polyisocyanatkomponente bei 23° C eine Viskosität von 50 bis 10 000 mPa.s aufweist und aus einem oder mehreren organischen Polyisocyanaten mit ausschließlich (cyclo)aliphatisch gebundenen Isocyanatgruppen besteht.

Gegenstand der Erfindung ist auch ein Verfahren zur Herstellung eines solchen Lacks, welches dadurch gekennzeichnet ist, daß man in einer wäßrigen Lösung oder Dispersion der Komponente a) die Polyisocyanatkomponente b) emulgiert, wobei die Mengenverhältnisse der beiden Komponenten einem NCO/OH-Äquivalentverhältnis bezogen auf die Isocyanatgruppen der Polyisocyanatkomponente und die eingebauten Hydroxylgruppen der Polymerisatkomponente von 0,5:1 bis 5:1 entsprechen, und wobei gegebenenfalls mitverwendete Hilfs- und Zusatzstoffe der Polymerisatlösung und/oder Dispersion vor der Zugabe der Polyisocyanatkomponente einverleibt worden sind.

Gegenstand der Erfindung ist auch die Verwendung von Kombinationen aus Komponente a) und Komponente b), wie in Anspruch 1 definiert, wobei b) in a) emulgiert vorliegt und die Mengenverhältnisse der beiden Komponenten einem NCO/OH-Äquivalentverhältnis, bezogen auf die Isocyanatgruppen der Polyisocyanatkomponente und die eingebauten Hydroxylgruppen der Polymerisatkomponente von 0,5:1 bis 5:1 entsprechen, als Bindemittel in wäßrigen Zweikomponenten-Polyurethanlacken.

Bei der Komponente a) handelt es sich um Hydroxylgruppen, Sulfonat- und/oder Carboxylatgruppen, vorzugsweise Carboxylatgruppen und gegebenenfalls Sulfonsäure und/oder Carboxylgruppen, vorzugsweise Carboxylgruppen aufweisende Polymerisate von olefinisch ungesättigten Monomeren, die ein nach der Gelpermeationschromatographie bestimmbares Molekulargewicht Mₙ (Zahlenmittel) von 500 bis 50.000, insbesondere 1.000 bis 10.000, eine Hydroxylzahl von 16,5 bis 264, vorzugsweise 33 bis 165 mg KOH/g Festharz, eine Säurezahl (bezogen auf die nicht neutralisierten Sulfonsäure- und/oder Carboxylgruppen) von 0 bis 150, vorzugsweise 0 bis 100 mg KOH/g Festharz und einen Gehalt an Sulfonat- und/oder Carboxylatgruppen von 5 bis 417, vorzugsweise 24 bis 278 Milliäquivalenten pro 100 g Feststoff aufweisen. Besonders bevorzugt handelt es sich bei diesen anionischen Gruppen um Carboxylatgruppen.

Die Polymerisatharze a) kommen bei der Herstellung der erfindungsgemäßen Lacke im allgemeinen in Form von 10- bis 50-, vorzugsweise 20- bis 40-gew.-%igen wäßrigen Lösungen und/oder Dispersionen zum Einsatz, die im allgemeinen eine Viskosität von 10 bis 10⁵, vorzugsweise 100 bis 10.000 mPa.s/23° C und pH-Werte von 5 bis 10, vorzugsweise 6 bis 9 aufweisen.

In Abhängigkeit vom Molekulargewicht der Polymerisate und ihrem Gehalt an anionischen Gruppen bzw. an freien Säuregruppen, insbesondere Carboxylgruppen handelt es sich bei den wäßrigen, die Polymerisate enthaltenden Systemen um echte Dispersionen, kolloiddisperse oder molekulardisperse Dispersionen, im allgemeinen jedoch um sogenannte "Teildispersionen", d.h. um wäßrige Systeme, die zum Teil molekulardispers und zum anderen Teil kolloiddispers sind.

Die Herstellung der Hydroxylgruppen aufweisenden Polymerisate erfolgt durch an sich bekannte Copolymerisation von olefinisch ungesättigten Monomeren, wobei als Monomere sowohl Hydroxylgruppen aufweisende Monomere als auch Säuregruppen, d.h. Sulfonsäuregruppen oder Carboxylgruppen, vorzugsweise Carboxylgruppen aufweisende Monomere, im allgemeinen zusammen mit weiteren Monomeren copolymerisiert werden, wonach die vorliegenden Säuregruppen zumindest teilweise neutralisiert werden.

Die Mitverwendung der Säuregruppen aufweisenden Monomeren erfolgt zwecks Einbaus von Carboxyl- und/oder Sulfonsäuregruppen in die Copolymerisate, die aufgrund ihrer Hydrophilie die Wasserlöslichkeit bzw. -dispergierbarkeit der Polymerisate, insbesondere nach erfolgter zumindest partieller Neutralisation der Säuregruppen gewährleisten. Die Menge der mitverwendeten "sauren" Comonomere und der Neutralisationsgrad der zunächst erhaltenen "sauren" Polymerisate entspricht den obengemachten Angaben bezüglich der Säurezahl und des Gehalts an Sulfonat-und/oder Carboxylatgruppen. Im allgemeinen kommen die "sauren" Comonomeren in Mengen von 1 bis 30, vorzugsweise 5 bis 20 Gew.-%, bezogen auf das Gesamtgewicht der eingesetzten Monomeren zum Einsatz. Bei Verwendung von weniger als 5 Gew.-% an "sauren" Monomeren resultieren im allgemeinen auch nach vollständiger Neutralisation wäßrige Dispersionen, in denen allenfalls ein geringer Polymeranteil molekulardispers gelöst enthalten ist. Geht man zu höheren Gehalten an "sauren" Monomeren bei konstantem Neutralisationsgrad über, resultieren steigende Anteile an molekulardispers gelöster Spezies, bis schließlich bei Gehalten von über ca. 12 Gew.-% die kolloiddispersen Anteile verschwinden.

Geeignete "saure" Comonomere sind im Prinzip alle olefinisch ungesättigten, polymerisierbaren Verbindungen, die mindestens eine Carboxyl- und/oder Sulfonsäuregruppe aufweisen wie beispielsweise olefinisch ungesättigte Mono- oder Dicarbonsäuren des Molekulargewichtsbereichs 72 bis 207 wie Acrylsäure, Methacrylsäure, Maleinsäure, Itaconsäure oder Sulfonsäuregruppen aufweisende olefinisch ungesättigte Verbindungen wie beispielsweise 2-Acrylamido-2-methylpropansulfonsäure oder beliebige Gemische derartiger olefinisch ungesättigter Säuren.

Die Hydroxylgruppen aufweisenden Monomeren werden in solchen Mengen mitverwendet, daß die obengenannten Hydroxylzahlen der Polymerisate resultieren, die im übrigen im allgemeinen einem Hydroxylgruppengehalt der Polymerisate von 0,5 bis 8, vorzugsweise 1 bis 5 Gew.-% entsprechen. Im allgemeinen werden die hydroxyfunktionellen Comonomeren im Mengen von 3 bis 75, vorzugsweise 6 bis 47 Gew.-%, bezogen auf das Gesamtgewicht der eingesetzten Monomeren mitverwendet. Außerdem muß selbstverständlich darauf geachtet werden, daß im Rahmen der gemachten Angaben die Menge der hydroxyfunktionellen Monomeren so gewählt wird, daß Copolymerisate entstehen, die im statistischen Mittel pro Molekül mindestens zwei Hydroxylgruppen aufweisen.

Geeignete Hydroxylgruppen aufweisende Monomere sind insbesondere Hydroxyalkylester der Acrylsäure oder Methacrylsäure mit vorzugsweise 2 bis 4 Kohlenstoffatomen im Alkylrest wie z.B. 2-Hydroxyethylacrylat oder -methacrylat, 2- oder 3-Hydroxypropylacrylat oder -methacrylat, sowie die isomeren Hydroxybutylacrylate oder -methacrylate oder beliebige Gemische derartiger Monomerer.

Als dritte Gruppe von olefinisch ungesättigten Monomeren, die bei der Herstellung der Copolymerisate im allgemeinen mitverwendet werden, sind solche olefinisch ungesättigte Verbindungen zu nennen, die weder saure Gruppen noch Hydroxylgruppen aufweisen. Hierzu gehören beispielsweise Ester der Acrylsäure bzw. der Methacrylsäure mit 1 bis 18, vorzugsweise 1 bis 8 Kohlenstoffatomen im Alkoholrest wie z.B. Methylacrylat, Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomerer. Auch Epoxidgruppen aufweisende Comonomere wie z.B. Glycidylacrylat oder -methacrylat oder Monomere wie N-Methoxymethylacrylamid oder -methacrylamid können in geringen Mengen mitverwendet werden.

Die Monomeren der letztgenannten dritten Gruppe ohne Säure- und Hydroxylgruppen werden im allgemeinen in Mengen von bis zu 90 Gew.-%, vorzugsweise 40 bis 80 Gew.-%, bezogen auf das Gesamtgewicht der eingesetzten Monomeren mitverwendet.

Die Herstellung der Polymerisate kann durch Polymerisation nach üblichen Verfahren durchgeführt werden. Vorzugsweise erfolgt die Herstellung der Polymerisate in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Als Lösungsmittel kommen beispielsweise Aromaten, wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösemittel wie Methylenchlorid oder Trichlormonofluorethan in Betracht.

Die durch Radikale inittierte Polymerisation kann durch Initiatoren ausgelöst werden, deren Halbwertzeiten des Radikalzerfalls bei 80 bis 180°C zwischen 0,01 und 400 min. liegen. Im allgemeinen erfolgt die Copolymerisationsreaktion im genannten Temperaturbereich, vorzugsweise zwischen 100 und 160°C, unter einem Druck von 10³ bis 2 x 10⁴ mbar, wobei sich die genaue Polymerisationstemperatur nach der Art des Initiators richtet. Die Initiatoren werden in Mengen von 0,05 bis 6 Gew.-%, bezogen auf die Gesamtmenge an Monomeren, eingesetzt.

Geeignete Initiatoren sind z.B. aliphatische Azoverbindungen wie Azoisobutyronitril sowie Peroxide wie z.B. Dibenzoylperoxid, t-Butylperpivalat, t-Butyl-per-2-ethylhexanoat, t-Butylperbenzoat, t-Butylhydroperoxid, Di-t-butylperoxid, Cumolhydroperoxid sowie Dicyclohexyl- und Dibenzylperoxydicarbonat.

Zur Regelung des Molekulargewichts der Polymeren können übliche Regler eingesetzt werden wie z.B. n-Dodecylmercaptan, Diisopropylxanthogendisulfid, Di(methylentrimethylolpropan)xanthogendisulfid und Thioglykol. Sie werden in Mengen von höchstens 3 Gew.-% bezogen auf das Monomerengemisch zugegeben.

Nach beendeter Polymerisation werden die Copolymerisate in eine wäßrige Lösung bzw. Dispersion überführt. Hierzu wird die organische Polymerlösung in eine meist vorgewärmte Wasserphase eingeleitet und gleichzeitig das organische Lösemittel destillativ, im allgemeinen unter Anlegen eines Vakuums, entfernt. Um eine gute Wasserlöslichkeit bzw. -dispergierbarkeit zu erreichen, muß der Wasserphase im allgemeinen ein Neutralisationsmittel, wie z.B. anorganische Basen, Ammoniak oder Amine, zugesetzt werden. Als anorganische Basen können beispielsweise Natriumhydroxid, Kaliumhydroxid, als Amine neben Ammoniak Trimethylamin, Triethylamin, Dimethylethanolamin eingesetzt werden. Die Neutralisationsmittel können sowohl im stöchiometrischen Unter- als auch Überschuß eingesetzt werden, wobei die obengenannten Gehalte an Sulfonat- und/oder Carboxylatgruppen, insbesondere an Carboxylatgruppen und die obengenannten Säurezahlen resultieren. Im Falle einer völligen Neutralisation der vorliegenden sauren Gruppen resultiert dann die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalte an Sulfonat- und/oder Carboxylatgruppen der Menge des eingesetzten Neutralisationsmittels. Insbesondere bei Verwendung eines stöchiometrischen Überschusses an Neutralisationsmittel ist jedoch darauf zu achten, daß durch den Polyelektrolytcharakter der Polymeren eine deutliche Viskositätszunahme erfolgen kann. Die erhaltenen wäßrigen Lösungen bzw. Dispersionen besitzen die obengenannten Konzentrationen und Viskositäten und weisen im allgemeinen einen Gehalt an Restlösungsmittel von unter 5 Gew.-%, vorzugsweise von unter 2 Gew.-% auf. Die praktisch restlose Entfernung auch von höher als Wasser siedenden Lösungsmitteln ist durch azeotrope Destillation möglich.

Bei der Polyisocyanatkomponente b) handelt es sich um beliebige organische Polyisocyanate mit aliphatisch, cycloaliphatischs araliphatisch und/oder aromatisch gebundenen, freien Isocyanatgruppen, die bei Raumtemperatur flüssig sind. Die Polyisocyanatkomponente b) weist bei 23° C eine Viskosität von 50 bis 10 000, vorzugsweise 50 bis 1000 mPa.s auf. Besonders bevorzugt handelt es sich bei der Polyisocyanatkomponente b) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23° C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polymerisatdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Als Komponente b) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, besonders bevorzugt sind.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N''-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen auf N,N',N''-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23° C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Die Polyisocyanatkomponente b) kann im übrigen aus beliebigen Gemischen der beispielhaft genannten Polyisocyanate bestehen.

Zur Herstellung der gebrauchsfertigen Lacke wird die Polyisocyanatkomponente b) in der wäßrigen Dispersion der Polymerisate a) emulgiert, wobei das gelöste bzw. dispergierte Polymerisat gleichzeitig die Funktion eines Emulgators für das zugesetzte Polyisocyanat übernimmt. Dies gilt insbesondere für den bevorzugten Fall der Verwendung von nicht hydrophil modifizierten Polyisocyanaten b), Grundsätzlich möglich, jedoch keineswegs bevorzugt ist die Verwendung von hydrophil modifizierten Polyisocyanaten als Polyisocyanatkomponente b), die aufgrund der eingebauten ionischen oder nichtionisch-hydrophilen Zentren selbstdispergierbar sind.

Die Durchmischung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente b) und die alkoholischen Hydroxylgruppen der Komponente a) von 0,5:1 bis 5:1, vorzugsweise 0,8:1 bis 2:1 resultiert.

Vor der Zugabe der Polyisocyanatkomponente b) können der Polymerisatkomponente a), d.h. der Dispersion bzw. Lösung der Polymerisate die üblichen Hilfs- und Zusatzmittel der Lacktechnologie einverleibt werden. Hierzu gehören beispielsweise Entschäumungsmittel, Verlaufhilfsmittel, Pigmente, Dispergierhilfsmittel für die Pigmentverteilung u.dgl.

Die so erhaltenen erfindungsgemäßen Lacke eignen sich für praktisch alle Einsatzgebiete, in denen heute lösemittelhaltige, lösemittelfreie oder andersartige wäßrige Anstrich- und Lacksysteme mit einem erhöhten Eigenschaftsprofil Verwendung finden, z.B.: Beschichtung praktisch aller mineralischer Baustoff-Oberflächen wie Kalk- und/oder Zement gebundene Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung metallischer Oberflächen; Lackierung asphalt- oder bitumenhaltiger Straßenbeläge; Lackierung und Versiegelung diverser Kunststoffoberflächen.

In den nachfolgenden Beispielen beziehen sich alle Prozentangaben auf Gewichtsprozente.

### Beispiele

### Ausgangsmaterialien:

### Polyisocyanat 1

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N''-Tris(6-isocyanatohexyl)-isocyanurat trimerisierten Hexamethylendiisocyanates im Gemisch mit untergeordneten Mengen an höheren Homologen beider Produkte Polyisocyanat 1 besitzt in seiner 100 %igen, also lösemittelfreien Lieferform eine durchschnittliche Viskosität von 150 mPa.s/23°C und einen durchschnittlichen Gehalt an freien NCO-Gruppen von 22,5 %.

### Polyisocyanat 2

N,N',N''-Tris(6-isocyanatohexyl)-biuret mit untergeordneten Mengen seiner höheren Homologen. Das 100 %ige Produkt weist einen durchschnittlichen NCO-Gehalt von 22,5 Gew.-% und eine durchschnittliche Viskosität von ca. 3000 mPa.s/23°C auf.

### Polyisocyanat 3

N,N',N''-Tris(6-isocyanatohexyl)-isocyanurat mit untergeordneten Mengen an höheren Homologen, wie es gemäß US-PS 4 324 879 erhalten werden kann. Das 100 %ige Produkt weist eine Viskosität von ca. 3200 mPa.s/23°C und einen durchschnittlichen NCO-Gehalt von 21,5 auf.

### Polyisocyanat 4

Polyisocyanat-Prepolymeres, das durch Umsetzung von 80 Gew.-Teilen Polyisocyanat 2 und 20 Gew.-Teilen eines gesättigten Polyesters aus Phthalsäure und Propylenglykol mit einem Hydroxylgruppengehalt von 2 % hergestellt worden ist. Das Prepolymer weist 65 %ig gelöst in Solventnaphtha 100/Methoxypropylacetat (Gew.-Verhältnis der Lösungsmittel = 4:1) einen NCO-Gehalt von 10,4 % und eine Viskosität von 1300 mPa.s/23°C auf.

### Polyisocyanat 5

Polyisocyanatgemisch der Diphenylmethanreihe, welches als 100 %ige Substanz einen NCO-Gehalt von 31 % und eine Viskosität von 120 mPa.s/23°C aufweist.

### Polymerisatharze A bis H:

### Herstellungsvorschrift:

In einem 3 1-Rührautoklaven mit Rückflußkühler, wirksamem Rührer sowie Gaseinlaß und -auslaß wird die Vorlage I (vgl. Tabelle) vorgelegt und mit Stickstoff gespült. Anschließend wird Stickstoff in einem stetigen Strom übergeleitet und die Vorlage unter Rühren bei ca. 200 U/min auf eine Innentemperatur von 110° C erwärmt. Anschließend wird die Mischung II im Verlauf von 4 Stunden gleichmäßig zudosiert. Nach beendetem Zulauf wird ca. 30 min. nachgerührt und danach mit der Mischung III nachaktiviert. Die Nachreaktionszeit beträgt 6 Stunden. Anschließend werden bei einem Vakuum von ca. 200 bis 400 mbar ca. 100 ml Restmonomere zusammen mit dem Lösemittel Essigsäure-n-butylester abdestilliert. Die abdestillierte Menge wird durch frisches Lösemittel ersetzt. Die im organischen Lösemittel gelösten Polymerharze besitzen die ebenfalls in der Tabelle angegebenen physikalisch-chemischen Daten.

Um die organische Lösung in eine wäßrige Lösung bzw. Dispersion zu überführen, werden in einem 8 l-Reaktor die Mischungen IV vorgelegt und unter Rühren auf ca. 95°C erwärmt. Anschließend werden die organischen Polymerlösungen im Verlauf von ca. 0,5 bis 1 Stunde zudosiert und gleichzeitig Essigsäure-n-butylester durch Azeotropdestillation entfernt. Die Menge an abdestilliertem Wasser wird dabei kontinuierlich ersetzt. Mit einer ca. 25 %igen wäßrigen Ammoniaklösung bzw. mit N-Dimethylethanolamin (im Beispiel H) wird auf pH-Werte zwischen 7 und 8 eingestellt. Die physikalisch-chemischen Daten der wäßrigen Polymerisatlösungen bzw. -dispersionen sind ebenfalls in der Tabelle aufgelistet. Der Lösungsmittelgehalt der letztendlich erhaltenen wäßrigen Teildispersionen liegt stets unter 2 %.

| | A | B | C | D | E | F | G | H |
|---|---|---|---|---|---|---|---|---|
| I. Vorlage | | | | | | | | |
| Essigsäure-n-butylester (g) | 900 | 900 | 900 | 900 | 900 | 900 | 900 | 900 |

| II. | | | | | | | | |
|---|---|---|---|---|---|---|---|---|
| Methacrylsäure-2-hydroxyethylester (g) | 344 | 459 | 574 | 459 | 459 | 459 | 459 | 459 |
| Methacrylsäuremethylester (g) | 323 | 266 | 208 | 191 | 116 | 381 | 231 | 381 |
| Styrol (g) | 323 | 266 | 208 | 191 | 116 | - | - | - |
| Acrylsäure-n-butylester (g) | 300 | 300 | 300 | 450 | 600 | 450 | 600 | 450 |
| Acrylsäure (g) | 150 | 150 | 150 | 150 | 150 | 150 | 150 | 150 |
| Azoisobutyronitril (g) | 50 | 50 | 50 | 50 | 50 | 50 | 50 | 50 |

| III. | | | | | | | | |
|---|---|---|---|---|---|---|---|---|
| t-Butylperoctoat (g) | 10 | 10 | 10 | 10 | 10 | 10 | 10 | 10 |
| Essigsäure-n-butylester (g) | 100 | 100 | 100 | 100 | 100 | 100 | 100 | 100 |
| Konzentration (Gew.-%) | 63,7 | 65,3 | 64,4 | 58,8 | 58,6 | 60,9 | 58,9 | 59,1 |
| Viskosität (Pa.s 23° C) | 27,9 | 74,4 | 49,0 | 7,8 | 5,0 | 20,8 | 6,0 | 6,1 |
| Hydroxylzahl (mg KOH/g Lösung) | 62,7 | 82,8 | 95,3 | 80,3 | 77,7 | 80,8 | 79,7 | 79,9 |
| Säurezahl (mg KOH/g Lösung) | 47,3 | 46,8 | 44,6 | 46,1 | 46,1 | 48,6 | 46,6 | 46,5 |

| IV. | | | | | | | | |
|---|---|---|---|---|---|---|---|---|
| entionisiertes Wasser (g) | 3500 | 3500 | 3500 | 3500 | 3500 | 3500 | 3500 | 3500 |
| wäßrige Ammoniaklösung (25 %) (g) | 143 | 143 | 143 | 143 | 143 | 143 | 143 | - |
| n-Dimethylethanolamin (g) | - | - | - | - | - | - | - | 175 |
| Konzentration (Gew.-%) | 26,3 | 30,1 | 30,1 | 24,8 | 26,2 | 27,8 | 26,2 | 30,3 |
| pH-Wert | 6,8 | 6,5 | 6,6 | 7,1 | 7,1 | 7,1 | 7,0 | 7,6 |
| Viskosität* (Pa.s/23° C) | - | - | - | 0,97 | 4,6 | 5,7 | 1,8 | - |
| Carboxylatgruppen (Mequiv./100 g Feststoff) | 139 | 139 | 139 | 139 | 139 | 139 | 139 | 131 |
| Säurezahl (berechnet) [mg KOH/g Festharz] (nach Neutralisation) | 0 | 0 | 0 | 0 | 0 | 0 | 0 | 4,4 |

| | | | | | | | | |
|---|---|---|---|---|---|---|---|---|
| * Es handelt sich hierbei um Mittelwerte; die Viskositäten sind aufgrund von Strukturviskosität nicht konstant. | | | | | | | | |

### Beispiel 1

100,0 Gew.-Teile dem Polyhydroxyacrylats G mit einem Festkörpergehalt von 26,2 Gew.-%, einer Viskosität von 1800 mPa.s bei 23° C und einem pH-Wert von 7,0 werden mit 8,0 Gew.-Teilen demineralisiertem Wasser, 0,25 Gew.-Teilen einem handelsüblichen, siliconhaltigen Entschäumers, (®Foamex 1488 der Fa. Th. Goldschmidt AG, Essen), 0,3 Gew.-Teilen eines handelsüblichen Dispergierhilfsmittels (Pigmentverteiler A der Fa. BASF AG, Ludwigshafen) und 19,0 Gew.-Teilen Titandioxid Rutil (Bayertitan R-KB-4 der Bayer AG, Leverkusen) gemischt und ca. 20 Minuten unter einem Dissolver bei einer Drehgeschwindigkeit von ca. 14 m/sec. dispergiert. Man erhält so einen Dispergieransatz mit praktisch unbegrenzter Lagerstabilität.
a) nach Zugabe von 11,7 Gew.-Teilen dem Polyisocyanats 1 erhält man einen weiß pigmentierten, wasserverdünnbaren Zweikomponenten-Polyurethanlack, der sich erfindungsgemäß wie folgt zusammensetzt:

| | Gew.-% |
|---|---|
| Bindemittel | 27,21 |
| Pigment | 13,61 |
| Hilfsmittel | 0,43 |
| Gesamtfestkörper | 41,25 |
| Wasser | 58,75 |
| | 100,00 |

Der verarbeitungsfertige Ansatz enthält keine organischen Lösemittel. Das Verhältnis NCO/OH-Gruppen beträgt 1,0 und die Verarbeitungszeit liegt bei ca. 4 Stunden.
Filme, die in einer Naßschichtdicke von 100 bis 600 µm appliziert wurden (entsprechend einer Trockenschichtdicke von 25 bis 180 µm), trocknen innerhalb von 30 bis 120 Minuten zu einem kleb- und störungsfreien Film auf. Der Härtungsprozeß ist nach 7 bis 14 Tagen vollends abgeschlossen.
b) Nach Zugabe von 20,0 g des Polyisocyanats 4, mit 6 g Solventnaphtha 100 auf 50 % Festkörper verdünnt, zu dem obengenannten Dispergieransatz erhält man einen verarbeitungsfertigen, weiß pigmentierten wasserverdünnbaren Zweikomponenten-Polyurethanlack, der sich erfindungsgemäß wie folgt zusammensetzt:

| | Gew.-% |
|---|---|
| Bindemittel | 25,54 |
| Pigment | 12,37 |
| Additiv | 0,35 |
| Gesamtfestkörper | 38,26 |
| Wasser | 53,27 |
| Organische Löser | 8,47 |
| | 100,00 |

Der Gesamtansatz enthält einen Anteil an organischen Lösern von nur 8,47 Gew.-%. Das Verhältnis an NCO/OH-Gruppen beträgt 1,0 und die Verarbeitungszeit ist über mehrere Stunden gegeben.
Filme, die in einer Naßschichtdicke von 100 bis 600 µm appliziert werden (entsprechend einer Trockenschichtdicke von 25 bis 180 µm) trocknen innerhalb von 30 bis 120 Minuten zu einem kleb- und störungsfreien Film. Der Härtungsprozeß ist nach 7 bis 14 Tagen vollends abgeschlossen.
c) Nach Zugabe von 22,4 Gew.-Teilen Polyisocyanat 3, 50 %ig gelöst in Solventnaphtha 100 (= 11,2 Gew.-Teile fest) erhält man einen weiß pigmentierten wasserverdünnbaren Zweikomponenten-Polyurethanlack, der sich erfindungsgemäß wie folgt zusammensetzt:

| | Gew.-% |
|---|---|
| Bindemittel | 24,94 |
| Additiv | 0,37 |
| Pigment | 12,67 |
| Gesamtfestkörper | 37,98 |
| Wasser | 54,55 |
| Organische Löser | 7,47 |
| | 100,00 |

Der Gesamtansatz enthält einen Anteil an organischen Lösern von nur 7,47 Gew,-%. Das Verhältnis von NCO/OH-Gruppen beträgt 1,0 und die Verarbeitungszeit mehrere Stunden. Filme, die in einer Naßschichtdicke von 100 bis 600 µm (entsprechend 25 bis 180 µm) Trockenschichtdicke appliziert werden, trocknen innerhalb von 30 bis 120 Minuten zu einem kleb- und störungsfreien Film aus. Der Härtungsprozeß ist nach 7 bis 14 Tagen vollends abgeschlossen.

Die gehärteten Filme der Beispiele 1a bis 1c können wie folgt charakterisiert werden:

| | 1a | 1b | 1c |
|---|---|---|---|
| Pendelhärte gemäß DIN 53 157 (s) | 75 | 75 | 85 |
| Glanz gemäß DIN 67 530 60°-Winkel Löserbeständigkeit | 80 | 90 | 75 |
| Testbenzin | sehr gut | sehr gut | sehr gut |
| Toluol | sehr gut | sehr gut | sehr gut |
| Methoxypropylacetat | gutmäßig | gut | sehr gut |
| Aceton | mäßig | mäßig | mäßig |
| Ethanol | mäßig | gutmäßig | mäßig |

### Beispiel 2

100 Gew.-Teile des Polyhydroxyacrylats G mit einem Festkörpergehalt von 26,2 Gew.-%, einer Viskosität von 1800 mPa.s bei 23° C und einem pH-Wert von 7,0 werden mit 8,0 Gew.-Teilen demineralisiertem Wasser und 0,25 Gew.-Teilen eines handelsüblichen siliconhaltigen Entschäumers (®Foamex 1488 der Fa. Th. Goldschmidt AG, Essen) homogen verrührt.

Man erhält eine durch den Entschäumer verursachte leicht getrübte Harzlösung mit einer durchschnittlichen Auslaufviskosität nach DIN 53 211 von 200 Sekunden und praktisch unbegrenzter Lagerstabilität.

Nach Einrühren von Polyisocyanat 1 in der Weise, daß in 4 unterschiedlichen Ansätzen ein NCO/OH-Verhältnis von
a: 0,5 (Zugabe 5,57 Gew.-Tlen. Polyisocyanat 1
b: 1,0 /Zugabe 11,51 Gew.-Tlen. Polyisocyanat 1
c: 1,5 (Zugabe 17,26 Gew.-Tlen. Polyisocyanat 1
d: 2,0 (Zugabe 23,00 Gew.-Tlen. Polyisocyanat 1
entsteht, erhält man verarbeitungsfertige Klarlacke, die sich erfindungsgemäß wie folgt zusammensetzen:

| | A | B | C | D |
|---|---|---|---|---|
| NCO/OH = | 0,5 | 1,0 | 1,5 | 2,0 |
| Bindemittel: | 23,03 | 31,49 | 34,63 | 37,49 |
| Hilfsmittel: | 0,22 | 0,21 | 0,19 | 0,19 |
| Gesamtfestkörper: | 28,25 | 31,70 | 34,83 | 37,68 |
| Wasser: | 71,75 | 68,30 | 65,17 | 62,32 |
| Organische Löser: | - | - | - | - |
| | 100,0 | 100,0 | 100,0 | 100,0 |

Filme der Beispiele 2A bis 2D, die in einer Naßschichtdicke von 100 bis 600 µm, entsprechend einer Trockenschichtdicke von 25 bis 180 µm appliziert wurden, trockneten innerhalb von 30 bis 120 Minuten zu kleb- und störungsfreien Filmen. Der Härtungsprozeß ist nach 7 bis 14 Tagen vollends abgeschlossen.

| | 2A | 2B | 2C | 2D |
|---|---|---|---|---|
| Glanz nach DIN 67 530 60°-Meßwinkel | 100 | 100 | 100 | 100 |
| Pendelhärte n. DIN (s) Löserbeständigkeit | 50 | 60 | 85 | 100 |
| Testbenzin | sehr gut | sehr gut | sehr gut | sehr gut |
| Toluol | mäßig | gut | sehr gut | sehr gut |
| Methoxypropylacetat | mäßig | gut | gut | sehr gut |
| Aceton | mäßigschlecht | mäßigschlecht | mäßigschlecht | gut |
| Ethanol | mäßigschlecht | mäßigschlecht | mäßig | sehr gut |

### Beispiel 3

100 Gew.-Teile dem Polyhydroxyacrylats F mit einem Festkörpergehalt von 27,8 Gew.-%, einer Viskosität von 5700 mPa.s bei 23° C und einem pH-Wert von 7,1 wurden mit 8,0 Gew.-Teilen demineralisiertem Wasser, 0,25 Gew.-Teilen eines handelsüblichen, siliconhaltigen Entschäumers (®Foamex 1488 der Fa. Th. Goldschmidt AG, Essen), 0,3 Gew.-Teilen eines handelsüblichen Dispergierhilfsmittels (Pigmentverteiler A der Fa. BASF, Ludwigshafen) und 20,0 Gew.-Teilen eines handelsüblichen Titandioxid-Rutiltyps (Bayertitan R-KB-4 der Fa. BAYER AG, Leverkusen) gemischt und ca. 20 Minuten unter einem Dissolver bei einer Drehgeschwindigkeit von ca. 14 m/sec. dispergiert. Man erhält einen Dispergieransatz mit praktisch unbegrenzter Lagerstabilität.
a. Nach Zugabe von 16,28 Gew.-Teilen Polyisocyanat 2 erhält man einen verarbeitungsfertigen, weiß pigmentierten, wasserverdünnbaren Zweikomponenten-Polyurethanlack, der sich erfindungsgemäß wie folgt zusammensetzt:

| | Gew.-% |
|---|---|
| Bindemittel | 27,62 |
| Pigment | 13,81 |
| Hilfsmittel | 0,38 |
| Gesamtfestkörper | 41,81 |
| Wasser | 55,38 |
| Organische Löser | 2,81 |
| | 100,00 |

Der verarbeitungsfertige Ansatz enthält nur 2,81 Gew.-% organische Lösemittel. Das Verhältnis von NCO/OH-Gruppen beträgt 1,0, die Verarbeitungszeit beträgt mehrere Stunden.
Mit 180 µm Naßschichtstärke aufgetragene Filme (entsprechend ca. 50 µm Trockenfilm) trocknen innerhalb 30 bis 60 Minuten kleb- und störungsfrei auf. Der Härtungsprozeß ist nach ca. 7 bis 14 Tagen vollends abgeschlossen.
b. Verwendet man als Härtersubstanz für die beschriebene Pigmentdispergierung Polyisocyanat 1, so erhält man einen verarbeitungsfertigen Weißlack, der mich wie folgt zusammensetzt:

| | Gew.-% |
|---|---|
| Bindemittel | 28,42 |
| Pigment | 14,21 |
| Hilfsmittel | 0,39 |
| Gesamtfestkörper | 43,02 |
| Wasser | 56,98 |
| | 100,00 |

Der verarbeitungsfertige Zweikomponentenlack enthält keinerlei organische Lösemittel. Das Verhältnis von NCO/OH-Gruppen beträgt 1,0, die Verarbeitung ist über mehrere Stunden gegeben.
Mit 180 µm Naßschichtstärke aufgetragene Filme (entsprechend ca. 50 µm Trockenfilm) trocknen innerhalb von 30 bis 60 Minuten zu kleb- und störungsfreien Filmen. Der Härtungsprozeß ist nach 7 bis 14 Tagen vollends abgeschlossen.
Die Filmeigenschaften der nach Beispiel 3a und 3b applizierten Filme können wie folgt charakterisiert werden:

| | 3a | 3b |
|---|---|---|
| Pendelhärte (s), ca. Glanz gemäß DIN 67 530 | 65 | 110 |
| 60°-Meßwinkel Löserbeständigkeit | 85 | 85 |
| Testbenzin | sehr gut | sehr gut |
| Toluol | sehr gut | sehr gut |
| Methoxypropylacetat | gut-mäßig | gut-mäßig |
| Aceton | mäßig | mäßig |
| Ethanol | mäßig | mäßig |

## Patentansprüche

1. Zweikomponenten-Polyurethanlack, welcher als Bindemittelkomponenten
a) eine Polyolkomponente, bestehend aus mindestens einem Hydroxylgruppen aufweisenden Polymerisat von olefinisch ungesättigten Verbindungen und
b) eine Polyisocyanatkomponente einer Viskositat bei 23° C von 50 bis 10 000 mPa.s, bestehend aus mindestens einem organischen Polyisocyanat mit freien Isocyanatgruppen
in einem NCO/OH-Äquivalentverhältnis von 0,5:1 bis 5:1 entsprechenden Mengen, sowie gegebenenfalls die üblichen Hilfs- und Zusatzstoffe enthält, wobei die Komponente a) eine wäßrige Lösung und/oder Dispersion eines Hydroxylgruppen, sowie Sulfonat- und/oder
Carboxylatgruppen und gegebenenfalls Sulfonsäure- und/oder Carboxylgruppen aufweisenden Polymerisats mit einem Molekulargewicht Mn (Zahlenmittel) von 500 bis 50 000, einer Hydroxylzahl von 16,5 bis 264 mg KOH/g Festharz, einer Säurezahl von 0 bis 150 mg KOH/g Festharz und einem Gehalt an chemisch gebundenen Carboxylat- und/oder
Sulfonatgruppen von insgesamt 5 bis 417 Milliäquivalenten pro 100 g Feststoff darstellt, in der die Polyisocyanatkomponente b) emulgiert vorliegt.

2. Polyurethanlack gemäß Anspruch 1, dadurch gekennzeichnet, daß die Polyisocyanatkomponente b) aus einem oder mehreren organischen Polyisocyanaten mit ausschließlich (cyclo)aliphatisch gebundenen Isocyanatgruppen besteht.

3. Verfahren zur Herstellung von Polyurethanlacken gemäß Anspruch 1, dadurch gekennzeichnet, daß man in einer wäßrigen Lösung oder Dispersion der Komponente a) die Polyisocyanatkomponente b) emulgiert, wobei die Mengenverhältnisse der beiden Komponenten einem NCO/OH-Äquivalentverhältnis, bezogen auf die Isocyanatgruppen der Polyisocyanatkomponente und die eingebauten Hydroxylgruppen der Polymerisatkomponente, von 0,5:1 bis 5:1 entsprechen, und wobei gegebenenfalls mitverwendete Hilfs- und Zusatzstoffe der Polymerisatlösung und/oder Dispersion vor der Zugabe der Polyisocyanatkomponente einverleibt worden sind.

4. Verfahren gemäß Anspruch 3, dadurch gekennzeichnet, daß die Polyisocyanatkomponente b) aus mindestens einem organischen Polyisocyanat mit ausschließlich (cyclo)aliphatisch gebundenen Isocyanatgruppen besteht.

5. Verwendung von Kombinationen aus Komponente a) und Komponente b), wie in Anspruch 1 definiert, wobei b) in a) emulgiert vorliegt und die Mengenverhältnisse der bei den Komponenten einem NCO/OH-Äquivalentverhältnis, bezogen auf die Isocyanatgruppen der Polyisocyanatkomponente und die eingebauten Hydroxylgruppen der Polymerisatkomponente, von 0,5:1 bis 5:1 entsprechen, als Bindemittel in wäßrigen Zweikomponenten-Polyurethanlacken.

6. Verwendung gemäß Anspruch 5, dadurch gekennzeichnet, daß die Komponente b) aus mindestens einem organischen Polyisocyanat mit ausschließlich (cyclo)aliphatisch gebundenen Isocyanatgruppen besteht.

## Claims

1. Two-component polyurethane paint which contains as binder components
a) a polyol component composed of at least one hydroxyl-containing polymer of olefinically unsaturated compounds and
b) a polyisocyanate component having a viscosity at 23°C of 50 to 10,000 mPa.s consisting of at least one organic polyisocyanate containing free isocyanate groups
in quantities corresponding to an NCO:OH equivalent ratio of 0.5:1 to 5:1 and, optionally, the standard auxiliaries and additives, component a) being an aqueous solution and/or dispersion of a polymer containing hydroxyl groups and also sulfonate and/or carboxylate groups and, optionally, sulfonic acid and/or carboxyl groups having a (number-average) molecular weight Mn of 500 to 50,000, and having a hydroxyl value of 16.5 to 264 mg KOH/g solid resin, an acid value of 0 to 150 mg KOH/g solid resin and a content of chemically bound carboxylate and/or sulfonate groups of, in all, 5 to 417 milliequivalents per 100 g solids, in which polyisocyanate component b) is present in emulsified form.

2. Polyurethane paint according to Claim 1, characterized in that the polyisocyanate component b) is composed of one or more organic polyisocyanates containing exclusively (cyclo)aliphatically bound isocyanate groups.

3. Process for the production of the polyurethane paints according to Claim 1, characterized in that the polyisocyanate compound isocyanate b) is emulsified in an aqueous solution or dispersion of the component a), the quantitative ratios of the two components corresponding to an NCO:OH equivalent ratio of from 0.5:1 to 5:1, based on the isocyanate groups of the polyisocyanate component and the incorporated hydroxyl groups of the polymer component, and the auxiliaries and additives optionally used having been incorporated in the polymer solution and/or dispersion before addition of the polyisocyanate component.

4. Process according to Claim 3, characterized in that the polyisocyanate component consists b) of at least one organic polyisocyanate containing exclusively (cyclo)aliphatically bound isocyanate groups.

5. Use of combinations of component a) and component b), as defined in Claim 1, b) being emulsified being a) and the quantitative ratios of the two components corresponding to an NCO:OH equivalent ratio of 0.5:1 to 5:1, based on the isocyanate groups of the polyisocyanate component and the incorporated hydroxyl groups of the polymer component, as binders in aqueous two-component polyurethane paints.

6. Use according to Claim 5, characterized in that the component b) is composed of at least one organic polyisocyanate containing only (cyclo)aliphatically bound isocyanate groups.

## Revendications

1. Vernis à deux composants contenant, en tant que composants du liant:
a) un composant polyol consistant en au moins un polymère, portant des groupes hydroxyle, de composés à insaturation oléfinique, et
b) un composant polyisocyanate ayant une viscosité à 23°C de 50 à 10 000 mPa.s et qui consiste en au moins un polyisocyanate organique à groupes isocyanate libres, en quantités correspondant à un rapport de 0,5 : 1 à 5 : 1 entre les équivalents de NCO et les équivalents de groupes OH, et le cas échéant les produits auxiliaires et additifs usuels, le composant a) consistant en une solution et/ou dispersion aqueuse d'un polymère contenant des groupes hydroxyle et des groupes sulfonate et/ou carboxylate, et le cas échéant des groupes acide sulfonique et/ou carboxyle, ayant une masse moléculaire Mn (moyenne en nombre) de 500 à 50 000, un indice d'hydroxyle de 16,5 à 264 mg de KOH par gramme de résine solide, un indice d'acide de 0 à 150 mg de KOH par gramme de résine solide et une teneur en groupes carboxylate et/ou sulfonate liés chimiquement de 5 à 417 milliéquivalents au total pour 100 g de matières solides, et où le composant polyisocyanate b) est à l'état émulsionné.

2. Vernis selon la revendication 1, caractérisé en ce que le composant polyisocyanate b) consiste en un ou plusieurs polyisocyanates organiques portant exclusivement des groupes isocyanate à liaisons (cyclo)aliphatiques.

3. Procédé de préparation de vernis selon la revendication 1, caractérisé en ce que, dans une solution ou dispersion aqueuse du composant a), on émulsionne le composant polyisocyanate b), les proportions relatives des deux composants correspondant à un rapport de 0,5 : 1 à 5 : 1 entre les équivalents de groupes NCO et les équivalents de groupes OH, rapportés aux groupes isocyanates du composant polyisocyanate et aux groupes hydroxyle liés chimiquement du composant polymère, les produits auxiliaires et additifs éventuellement utilisés conjointement ayant été incorporés à la solution et/ou dispersion du polymère avant addition du composant polyisocyanate.

4. Procédé selon la revendication 3, caractérisé en ce que le composant polyisocyanate b) consiste en au moins un polyisocyanate organique à groupes isocyanate à liaisons exclusivement (cyclo)aliphatiques.

5. Utilisation de combinaisons de composant a) et de composant b) comme défini dans la revendication 1, où b) est à l'état émulsionné dans a) et les proportions des deux composants correspondent à un rapport de 0,5 : 1 à 5 : 1 entre les équivalents de groupes NCO et les équivalents de groupes OH, rapportés aux groupes isocyanates du composant polyisocyanate et aux groupes hydroxyle liés chimiquement du composant polymère, en tant que liants dans des produits de revêtement aqueux à deux composants.

6. Utilisation selon la revendication 5, caractérisée en ce que le composant b) consiste en au moins un polyisocyanate organique à groupes isocyanate exclusivement à liaisons (cyclo)-aliphatiques.
